# EUROPÄISCHE PATENTSCHRIFT

(11) **EP 0 781 685 B1**
(45) Veröffentlichungstag und Bekanntmachung des Hinweises auf die Patenterteilung: **12.06.2002**
(21) Anmeldenummer: 96120717.2
(22) Anmeldetag: 21.12.1996
(51) Int. Cl.: B60N 2/28

(54) **Kindersicherheitssitz**
Child safety seat
Siège de sécurité pour enfants

(30) Priorität: 27.12.1995 DE 19548850
(43) Veröffentlichungstag der Anmeldung: 02.07.1997
(73) Patentinhaber: Concord Kinderautositze- und Kindermöbel sowie Geräteherstellungsgesellschaft mbH, D-95346 Stadtsteinach (DE)
(72) Erfinder: Reithmeier, Harald, 95346 Stadtsteinach (DE); König, Walter, 72525 Münsingen (DE)
(74) Vertreter: LOUIS, PÖHLAU, LOHRENTZ & SEGETH

(56) Entgegenhaltungen:
- EP-A- 0 326 265
- DE-A- 4 328 625
- DE-U- 8 715 700
- DE-U- 8 808 637

## Beschreibung

Die Erfindung betrifft einen Kindersicherheitssitz mit einem Sitzelement und einem Rückenelement, wobei das Sitzelement ein Sitzteil und von diesem seitlich nach oben stehende Wangen, und das Rückenelement ein Rückenteil und von diesem seitlich nach vorne ragende Seitenwangen aufweist, und zur Festlegung des fahrzeugeigenen, einen Beckengurt und einen Diagonalgurt aufweisenden Dreipunktsicherheitsgurtes eines Kraftfahrzeugsitzes zwei seitliche, einseitig offene Schlitze vorgesehen sind.

Der erfindungsgemäße Kindersicherheitssitz kann mit einer Verstellmöglichkeit versehen sein, um den Kindersicherheitssitz wunschgemäß zwischen einer Aufrechtposition und einer Liegeposition verstellen zu können. Selbstverständlich ist es auch möglich, daß der Kindersicherheitssitz keine Verstellmöglichkeit besitzt. Der Kindersicherheitssitz kann einteilig ausgebildet sein, d.h. Sitzelement und Rückenlehne können miteinander integral verbunden sein. Desgleichen ist es möglich, daß das Sitzelement und das Rückenelement voneinander getrennte Teile sind, die miteinander geeignet verbunden sind. Die Seitenwangen können teil- bzw. abschnittweise vorgesehen sein.

Aus der DE 43 28 625 A1 ist ein Kindersicherheitssitz bekannt, bei dem das Rückenelement mit zwei Löchern ausgebildet ist, die durch einen in sich geschlossenen umlaufenden Rand begrenzt sind. Bei diesem Kindersicherheitssitz ist es also notwendig, den Dreipunktsicherheitsgurt durch die beiden allseitig begrenzten Löcher durchzustecken, was einen bestimmten Aufwand darstellt. Dieser Aufwand resultiert außerdem auch aus der Tatsache, daß der Kindersicherheitssitz, d.h. sein Sitzelement und sein Rückenelement mit einem Bezug bedeckt sind, durch welchen das Durchstecken des fahrzeugeigenen Dreipunktsicherheitsgurtes durch die beiden besagten Löcher im Rückenelement beeinträchtigt werden kann. Der fahrzeugeigene Dreipunktsicherheitsgurt ist bei diesem bekannten Kindersicherheitssitz zwischen dem Rückenelement und dem Bezug, d.h. auf der Rückseite des Bezuges vorgesehen, er dient einzig und allein zur Festlegung des Kindersicherheitssitzes am entsprechenden Fahrzeugsitz. Zum Festhalten eines Kindes am Kindersicherheitssitz ist dieser mit einem eigenen Gurtsystem ausgerüstet, das vorzugsweise als Hosenträger-Gurtsystem ausgebildet ist.

Aus der DE 38 09 968 A1 ist ein zwischen einer Sitz- und einer Liegeposition verstellbarer Kindersicherheitssitz bekannt, der mit Löchern ausgebildet ist, die zur Festlegung eines fahrzeugeigenen Sicherheitsgurtsystemes dienen. Nachdem bei diesem bekannten Kindersicherheitssitz auf jeder seiner beiden Seiten zwei voneinander getrennte Löcher ausgebildet sind, die jeweils durch einen in sich geschlossenen Rand begrenzt sind, ist dieser Kindersicherheitssitz für einen üblichen, einen Becken- und einen Diagonalgurt aufweisenden Dreipunktsicherheitsgurt eines Kraftfahrzeugs nicht geeignet, weil es nicht möglich ist, einen solchen Dreipunktsicherheitsgurt durch die entsprechenden Löcher des Kindersicherheitssitzes geeignet durchzustecken, um den Kindersicherheitssitz mit Hilfe des fahrzeugeigenen Sicherheitsgurtsystemes am zugehörigen Fahrzeugsitz festzulegen. Auch bei diesem bekannten Kindersicherheitssitz ist ein sitzeigenes Hosenträger-Gurtsystem vorgesehen, um ein Kind am Kindersicherheitssitz festzulegen.

Die US-A 4 883 315 offenbart einen Kindersicherheitssitz, der mit Hilfe eines fahrzeugeigenen, einen Becken- und einen Diagonalgurt aufweisenden Dreipunktsicherheitsgurtes an einem entsprechenden Sitz eines Kraftfahrzeuges festlegbar ist. Zu diesem Zwecke ist der Kindersicherheitssitz auf jeder Seite mit je einem Loch ausgebildet, die mittels eines in sich geschlossenen umlaufenden Randes begrenzt sind. Auch dieser bekannte Kindersicherheitssitz weist ein sitzeigenes Hosenträger-Gurtsystem zum Festlegen eines Kindes am Kindersicherheitssitz auf.

Bei allen diesen bekannten Kindersicherheitssitzen, wie sie oben beschrieben worden sind, sowie bei dem aus der EP 0 331 299 B1 bekannten Kindersicherheitssitz sind die zur Festlegung eines fahrzeugeigenen Sicherheitsgurtsystems vorgesehenen Löcher im Kindersicherheitssitz durch einen umlaufenden, in sich geschlossenen Rand begrenzt und festgelegt, so daß die Montage des fahrzeugeigenen Sicherheitsgurtes zur Festlegung des Kindersicherheitssitzes am entsprechenden Sitz des Fahrzeugs ein gezieltes Durchstecken des fahrzeugeigenen Sicherheitsgurtes durch die entsprechenden Löcher im Kindersicherheitssitz erfordert. Dieses gezielte Durchstecken bedingt einen entsprechenden Aufwand.

Es sind Kindersicherheitssitze bekannt, die dazu vorgesehen sind, ein Kind auf dem ihm zugewiesenen Sitzplatz zu halten, ohne dazu ein dem Kindersicherheitssitz eigenes Körpergurtsystem zu benötigen. Dort wird also sowohl der Kindersicherheitssitz als auch das Kind selbst, d.h. diese beiden gemeinsam, vom fahrzeugeigenen Dreipunktgurt gehalten und im Ernstfall gesichert. Bei diesen bekannten Kindersicherheitssitzen ergibt sich das Problem, daß der Kindersicherheitssitz es normalerweise nicht ermöglicht, den Diagonalgurt des fahrzeugeigenen Dreipunktgurtes so direkt über die Schulter des Kindes zu führen, wie es nach den Gesichtspunkten der Sicherheitstechnik erforderlich wäre. Da bei den marktüblichen Fahrzeugen der Diagonalgurt von oben/hinten, ausgehend bspw. von einer C-Säule des Fahrzeugs, über das Becken des Fahrgastes nach unten/hinten verläuft, nimmt die Außenkontur eines zwischen diesen Punkten angeordneten Kindersicherheitssitzes in unerwünschter Weise einen ungünstigen Einfluß auf den Verlauf des Diagonalgurtes.

Ein Kindersicherheitssitz der eingangs genannten Art ist aus der EP 0 326 265 A2 bekannt. Bei diesem bekannten Kindersicherheitssitz sind die beiden einseitig offenen Schlitze in einer von der Rückenlehne des Kindersicherheitssitzes nach oben stehenden Kopfstütze vorgesehen. Die Kopfstütze weist im Vergleich zur Rückenlehne eine reduzierte Breitenabmessung auf, so daß die Führung des Diagonalgurtes des Dreipunktsicherheitsgurtes durch die entsprechende Umlenkung eingeschränkt ist.

Aus der DE 88 08 637 ist ein Kindersicherheitssitz mit einer auf einem Unterteil zwischen mindestens einer Sitzposition und mindestens einer Liegeposition verstellbaren Sitzschale bekannt, die ein Sitzelement und eine Rückenlehne aufweist, wobei der Kindersicherheitssitz mittels eines Sicherheitsgurtes an einem Sitz eines Kraftfahrzeuges befestigbar ist. Bei diesem bekannten Kindersicherheitssitz weist die Rückenlehne ein Befestigungselement für den Sicherheitsgurt auf. Der Kindersicherheitssitz ist mittels des im Kraftfahrzeug vorhandenen Dreipunktgurtes befestigbar, wobei der Diagonalgurt durch das Befestigungselement gehalten wird und an der Rückseite des Kindersicherheitssitzes verläuft. Der Beckengurt des Dreipunktgurtes dient zum Festhalten des Unterteiles des Kindersicherheitssitzes.

Die DE 87 15 700 U1 offenbart eine Einrichtung zur Sicherung von Kleinkindern in Kraftfahrzeugen, welche eine Schale aufweist, die einen Sitzbereich und einen daran angrenzenden Rückenlehnenbereich sowie gegebenenfalls zumindest vom Rückenlehnenbereich vorgezogene Seitenwände zur seitlichen Abstützung des Kindes aufweist. Die Neigung des Rückenlehnenbereiches ist gegenüber der Sitzfläche des Sitzbereiches verstellbar. Zumindest eine Seitenwand des Rückenlehnenbereiches kann an ihrem der Schwenkachse zugekehrten Ende mit einer Ausnehmung zur Aufnahme des Beckengurtes des am Fahrzeug vorhandenen Dreipunktgurtes versehen sein.

Aus der EP-A-0 751 033 ist ein Kindersicherheitssitz mit einem Sitzelement und einem Rückenelement bekannt, wobei das Sitzelement ein Sitzteil und von diesem seitlich nach oben stehende Wangen aufweist. Das Rückenelement dieses Kindersicherheitssitzes weist ein Rückenteil auf, das mit einer höhenverstellbaren Kopfstütze kombiniert ist. Zur Festlegung des fahrzeugeigenen, einen Beckengurt und einen Diagonalgurt aufweisenden Dreipunktgurtes eines Kraftfahrzeugsitzes mit dem Diagonalgurt ist dieser Kindersicherheitssitz mit zwei seitlichen Gurtführungen versehen, die an wangenförmigen Vorderabschnitten der Kopfstütze vorgesehen sind. Diese Gurtführungen sind als Klemmeinrichtungen ausgebildet. Solche Klemmeinrichtungen sind mit einseitig offenen Schlitzen nicht vergleichbar.

Die EP-A-0 751 034 offenbart einen Kindersicherheitssitz mit einem Sitzelement und einem Rückenelement, wobei das Sitzelement ein Sitzteil und von diesem seitlich nach oben stehende Wangen und das Rückenelement ein Rückenteil aufweist, das mit einer höhenverstellbaren Kopfstütze kombiniert ist, die mit wangenförmigen Vorderabschnitten ausgebildet ist, an welchen als Klemmeinrichtungen gestaltete Gurtführungen vorgesehen sind. Auch bei diesem Kindersicherheitssitz ist das Rückenteil selbst nicht mit seitlich nach vome ragenden Seitenwangen ausgebildet.

Der Erfindung liegt die Aufgabe zugrunde, durch eine geeignete Ausbildung des Kindersicherheitssitzes einen Weg für den fahrzeugeigenen Sicherheitsgurt zu schaffen, der ihn ohne unnötige Umlenkungen direkt in passender Höhe und Schräge über die richtige Stelle an der Schulter des jeweiligen Kindes - unabhängig von der individuellen Größe oder Stärke des Kindes - führt.

Diese Aufgabe wird bei einem Kindersicherheitssitz der eingangs genannten Art erfindungsgemäß dadurch gelöst, daß die beiden seitlichen, einseitig offenen Schlitze am Rückenelement im Übergangsbereich zwischen dem Rückenteil und den Seitenwangen in den Seitenwangen des Rückenelementes vorgesehen sind, wobei jeder der beiden Schlitze mit einer solchen Länge ausgebildet ist, daß der fahrzeugeigene Sicherheitsgurt ohne unnötige Umlenkungen direkt in der passenden Höhe und in der passenden Schräge über die sicherheitstechnisch richtige Stelle an der Schulter des im Kindersicherheitssitz befindlichen Kindes geführt wird, wobei diese optimierte Gurtführung von der Größe bzw. Stärke des Kindes unabhängig ist.

Der Diagonalgurt des fahrzeugeigenen Dreipunktsicherheitsgurtes kann in den entsprechenden Schlitz einfach und zeitsparend eingeführt werden. Der Beckengurt des fahrzeugeigenen Dreipunktsicherheitsgurtes wird über das Sitzelement des Kindersicherheitssitzes gespannt. Durch die Ausbildung des Kindersicherheitssitzes mit den einseitig offenen länglichen Schlitzen ist es in vorteilhafter Weise nicht erforderlich, den fahrzeugeigenen Sicherheitsgurt gezielt durch Löcher bzw. Aussparungen durchstecken zu müssen, so daß der entsprechende Aufwand erheblich reduziert ist. Ein ganz wesentlicher Vorteil des erfindungsgemäßen Kindersicherheitssitzes besteht darin, daß er ohne unnötige Umlenkungen direkt in der passenden Höhe und in der passenden Schräge über die sicherheitstechnisch richtige Stelle an der Schulter des im Kindersicherheitssitz befindlichen Kindes geführt wird, wobei diese optimierte Gurtführung von der Größe bzw. Stärke des Kindes unabhängig ist.

Dadurch, daß bei dem erfindungsgemäßen Kindersicherheitssitz die beiden Schlitze im Übergangsbereich zwischen dem Rückenteil und den mindestens abschnittweise vorgesehenen Seitenwangen des Rückenelementes in den Seitenwangen des Rückenelementes vorgesehen sind, ergibt sich nicht nur eine zuverlässige Festlegung des Kindersicherheitssitzes am entsprechenden Fahrzeugsitz mit Hilfe des fahrzeugeigenen Dreipunktsicherheitsgurtes, sondern gleichzeitig auch der Vorteil, daß ein Kind am Kindersicherheitssitz mit Hilfe des fahrzeugeigenen Sicherheitsgurtes ohne störende Lose zuverlässig festgehalten wird. Auf ein eigenes Gurtsystem des Kindersicherheitssitzes wie einen üblichen Hosenträger-Sicherheitsgurt kann bei dem erfindungsgemäßen Kindersicherheitssitz verzichtet werden.

Ein weiterer Vorteil des erfindungsgemäßen Kindersicherheitssitzes besteht darin, daß der Sitzkomfort eines auf dem Kindersicherheitssitz sitzenden Kindes durch den Gurt nicht beeinträchtigt wird und gleichzeitig in einer Extremsituation wie einem Fahrzeugaufprall o.dgl. das auf dem Kindersicherheitssitz befindliche Kind mit Hilfe des fahrzeugeigenen Dreipunktsicherheitsgurtes zuverlässig festgehalten wird.

Bei dem erfindungsgemäßen Kindersicherheitssitz können die beiden seitlichen Schlitze als umgekehrte spazierstockförmige Schlitze ausgebildet sein, die zum Vorderrand der Seitenwangen des Rückenelementes hin offen sind. Aus fertigungstechnischen Gründen ist es jedoch bevorzugt, wenn die beiden Schlitze zur Oberseite des Rückenelementes hin offen ausgebildet sind.

Als zweckmäßig hat es sich bei dem erfindungsgemäßen Kindersicherheitssitz erwiesen, wenn in jeder seitlichen Wange des Sitzelementes ein Loch ausgebildet ist, das zum Oberrand der entsprechenden Wange hin durch eine Verengung offen ist. Mit derartigen Löchern in den beiden seitlichen Wangen des Sitzelementes ist auch der eingangs erwähnte Kindersicherheitssitz gemäß DE 43 28 625 A1 ausgebildet. Diese beiden Löcher in den seitlichen Wangen des Sitzelementes dienen zur Festlegung des Beckengurtes des fahrzeugeigenen Dreipunktsicherheitsgurtes, d.h. zur Festlegung des Kindersicherheitssitzes am Fahrzeugsitz und gleichzeitig auch zur Festlegung eines am Kindersicherheitssitz plazierten Kindes am Kindersicherheitssitz.

Zweckmäßig kann es bei dem erfindungsgemäßen Kindersicherheitssitz sein, wenn mindestens einer der beiden Schlitze mit einer Gurtklemmeinrichtung versehen ist. Diese Gurtklemmeinrichtung dient dann zum wunschgemäßen Festklemmen des Diagonalgurtes des fahrzeugeigenen Dreipunktsicherheitsgurtes und somit zur Fixierung des Kindersicherheitssitzes am entsprechenden Fahrzeugsitz.

Die Gurtklemmeinrichtung kann sich über die gesamte Länge des zugehörigen Schlitzes erstrecken, es ist jedoch auch möglich, die Gurtklemmeinrichtung im Vergleich zur Länge des zugehörigen Schlitzes kurz auszubilden und entlang des Schlitzes verstellbar vorzusehen. Unabhängig davon, ob sich die Gurtklemmeinrichtung über die Länge des zugehörigen Schlitzes erstreckt oder nur eine an die Breite des Diagonalgurtes des fahrzeugeigenen Dreipunktsicherheitsgurtes angepaßte Abmessung aufweist, kann die Gurtklemmeinrichtung entweder an der entsprechenden Seitenwange bspw. gegen die Kraft eines Federelementes um eine Lagerachse verschwenkbar angeordnet sein, oder um eine Achse verschwenkbar sein, die auf der Seite des Längsschlitzes vorgesehen ist, die zum Rückenteil zugehört, d.h. am Rückenteil vorgesehen ist.

Nachdem bei einer Ausbildung des erfindungsgemäßen Kindersicherheitssitzes mit zwei seitlichen, nach oben offenen Längsschlitzen die mechanische Stabilität des Kindersicherheitssitzes entsprechend beeinträchtigt sein kann, kann es zweckmäßig sein, an jedem Schlitz eine Verbindungs- und Stabilisierungseinrichtung vorzusehen, die zwischen einer den Schlitz freigebenden Stellung und einer den Schlitz überbrückenden, d.h. das offene Ende wieder verschließenden Überbrückungsstellung verstellbar ist. Zweckmäßig kann es hierbei sein, die Verbindungs- und Stabilisierungseinrichtung am offenen Ende des jeweiligen Schlitzes vorzusehen. Die Verbindungs- und Stabilisierungseinrichtung kann entlang des zugehörigen Schlitzes verstellbar vorgesehen sein. Um den Bedienungskomfort nicht zu beeinträchtigen, ist es zweckmäßig, wenn die Verbindungs- und Stabilisierungseinrichtung mit der weiter oben erwähnten Klemmeinrichtung geeignet kombiniert ist, weil es dann nicht erforderlich ist, sowohl die Klemmeinrichtung als auch die Verbindungs- und Stabilisierungseinrichtung voneinander unabhängig betätigen zu müssen, sondern weil dann bei einer entsprechenden Betätigung der Klemmeinrichtung automatisch auch die Verbindungs- und Stabilisierungseinrichtung passend betätigt wird.

Bei dem erfindungsgemäßen Kindersicherheitssitz können das Sitzelement und das Rückenelement miteinander integral verbunden sein, d.h. ein gemeinsames Gebilde darstellen, das bspw. in einem an sich bekannten Blasverfahren realisiert wird, zweckmäßig ist es jedoch, wenn das Sitzelement und das Rückenelement voneinander unabhängige, miteinander zum Kindersicherheitssitz verbundene Teile sind.

Ausführungsbeispiele des erfindungsgemäßen Kindersicherheitssitzes sind in der Zeichnung schematisch dargestellt und werden nachfolgend beschrieben. Es zeigen:
- Fig. 1: eine erste Ausbildung des Kindersicherheitssitzes in einer Seitenansicht in Kombination mit einem fahrzeugeigenen Dreipunktsicherheitsgurt,
- Fig. 2: einen Schnitt entlang der Schnittlinie II-II in Fig.1 durch das Rückenelement des Kindersicherheitssitzes,
- Fig. 3: eine abschnittweise Seitenansicht der Rückenlehne in Blickrichtung des Pfeiles III in Fig. 2 zur Verdeutlichung einer Gurtklemmeinrichtung, die sich über den Länge des zugehörigen Schlitzes erstreckt,
- Fig. 4: eine der Fig. 3 ähnliche Darstellung zur Verdeutlichung einer Gurtklemmeinrichtung, die im Vergleich zur Länge des zugehörigen Schlitzes kurz und entlang des Schlitzes verstellbar vorgesehen ist,
- Fig. 5: einen Schnitt entlang der Schnittlinie V-V in Fig.4,
- Fig. 6: eine den Figuren 2 und 5 ähnliche Darstellung zur Verdeutlichung einer Gurtklemmeinrichtung, die mit einer Verbindungs- und Stabilisierungseinrichtung kombiniert ist, und
- Fig. 7: eine der Fig. 1 ähnliche Seitenansicht eines Kindersicherheitssitzes mit umgekehrt spazierstockförmigen einseitig offenen Schlitzen im Rückenelement.

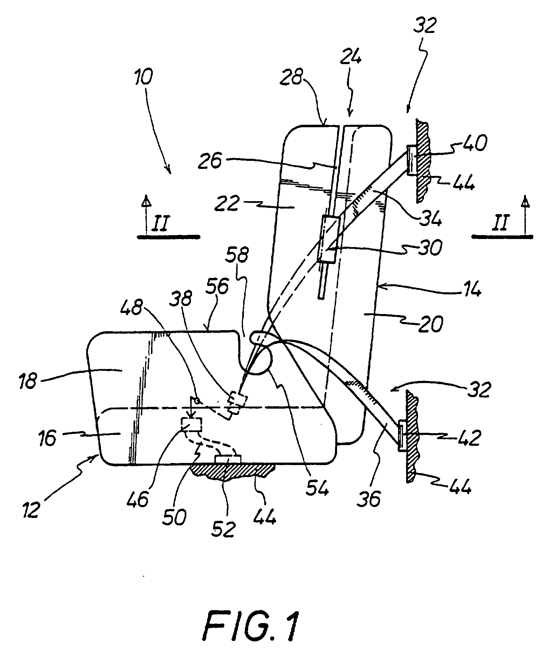

Fig. 1 zeigt schematisch in einer Seitenansicht einen Kindersicherheitssitz 10 mit einem Sitzelement 12 und einem Rückenelement 14, die miteinander einstückig verbunden sind, oder die als getrennte Teile ausgebildet und miteinander mechanisch verbunden sind. Das Sitzelement 12 weist ein Sitzteil 16 und vom Sitzteil 16 seitlich nach oben stehende Wangen 18 auf. Das Rückenelement 14 weist ein Rückenteil 20 und von diesem seitlich nach vorne ragende Seitenwangen 22 auf.

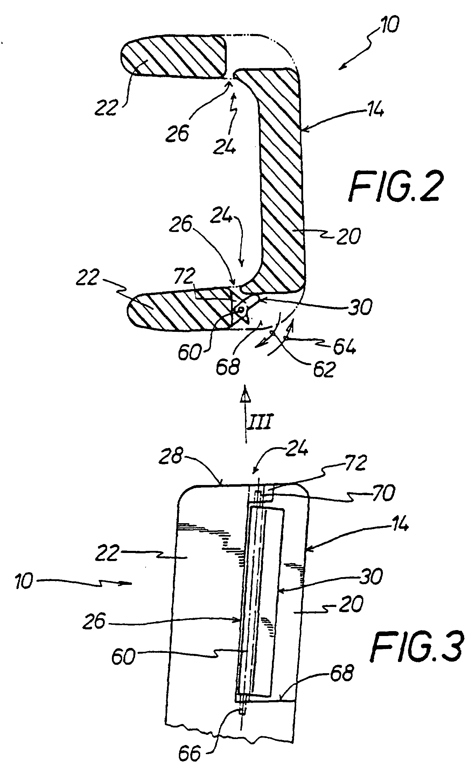

Wie auch aus Fig. 2, in der gleiche Einzelheiten mit denselben Bezugsziffern wie in Fig. 1 bezeichnet sind, ersichtlich ist, sind in den beiden Übergangsbereichen 24 zwischen dem Rückenteil 20 und der jeweiligen Seitenwange 22 Schlitze 26 ausgebildet, die -wie aus Fig. 1 ersichtlich ist- zur Oberseite 28 des Rückenelementes 14 hin offen sind. Mindestens einer der beiden Schlitze 26 ist mit einer Gurtklemmeinrichtung 30 versehen. Die Gurtklemmeinrichtung 30 ist in Fig. 1 nur durch einen Block schematisch angedeutet. Mit der Bezugsziffer 32 ist in Fig. 1 ein fahrzeugeigenes Dreipunktsicherheitsgurtsystem bezeichnet, das einen Diagonalgurt 34 und einen Beckengurt 36 aufweist. Der Diagonalgurt 34 und der Beckengurt 36 sind miteinander und mit einem Gurtsteckerteil 38 verbunden. Das davon.entfernte zweite Ende 40 des Diagonalgurtes 34 und das vom Gurtsteckerteil 38 entfernte zweite Ende 42 des Beckengurtes 36 sind am Fahrzeug festgelegt, was durch die schraffierten Flächen 44 angedeutet ist. Das Gurtsteckerteil 38 ist in ein Gurtschloß 46 einsteckbar, was durch den strichliert angedeuteten Pfeil 48 verdeutlicht ist. Das Gurtschloß 46 ist mit einem Gurtteil 50 verbunden, das wie der Diagonalgurt 34 und der Beckengurt 36 mit seinem zweiten Ende 52 am Fahrzeug festgelegt ist. Das ist ebenfalls durch eine schraffierte Fläche 44 angedeutet.

Die beiden seitlichen, nach oben stehenden Wangen 18 des Sitzelementes 12 sind jeweils mit einem Loch 54 ausgebildet, das zum Oberrand 56 der entsprechenden Wange 18 hin durch eine Verengung 58 offen ist.

Der Diagonalgurt 34 des fahrzeugeigenen Dreipunktsicherheitsgurtsystemes 32 erstreckt sich bspw. durch den rechten Schlitz 26 und durch das linke Loch 54 und der Beckengurt 36 erstreckt sich durch das linke und durch das rechte Loch 54 hindurch.

Fig. 2 verdeutlicht eine Gurtklemmeinrichtung 30, die um eine Lagerachse 60 zwischen einer Gurtklemmstellung und einer Gurtfreigabestellung verschwenkbar ist. Das ist durch die Pfeile 62 und 64 angedeutet. Der Pfeil 62 verdeutlicht die Verschwenkung der Gurtklemmeinrichtung 30 von der Gurtklemmposition in die Gurtfreigabestellung. Bei einer solchen Verschwenkung der Gurtklemmeinrichtung 30 wird ein (nicht gezeichnetes) Federelement der Gurtklemmeinrichtung 30 mechanisch gespannt. Wird die Gurtklemmeinrichtung 30 dann wieder freigelassen, so kann sich das besagte Federelement mechanisch wieder entspannen, wobei die Gurtklemmeinrichtung 30 automatisch von der erzwungenen Gurtfreigabestellung in die Gurtklemmposition zurückgestellt wird. Das ist durch den bogenförmigen Pfeil 64 angedeutet. Zweckmäßigerweise kann an jedem der beiden Schlitze 26 eine solche Gurtklemmeinrichtung 30 vorgesehen sein, um den Kindersicherheitssitz sowohl an der rechten Seite als auch an der linken Seite eines Fahrzeugs anordnen zu können. In Fig. 2 ist nur eine dieser beiden Gurtklemmeinrichtungen 30 zeichnerisch dargestellt.

In Fig. 2 ist die Lagerachse 60 für die Gurtklemmeinrichtung 30 als Achse gezeichnet, die an der zugehörigen Seitenwange 22 vorgesehen ist. Selbstverständlich wäre es auch möglich, die Lagerachse 60 am Rückenteil 20 vorzusehen.

Die Fig. 3 zeigt abschnittweise in einer Seitenansicht ein Rückenelement 14 mit einem Schlitz 26, der bspw. zur Oberseite 28 hin offen ist. Außerdem verdeutlicht die Fig.3 eine Gurtklemmeinrichtung 30, die sich über die gesamte Länge des zugehörigen Schlitzes 26 erstreckt. Die Gurtklemmeinrichtung 30 ist um die Lagerachse 60 herum zwischen der Gurtklemmposition und einer Gurtfreigabeposition verschwenkbar. Die Lagerachse 60 ist mit ihrem einen Endabschnitt 66 an einer Grundfläche 68 des zugehörigen Schlitzes 26 und mit ihrem zweiten Endabschnitt 70 an einer von der Seitenwange 22 zum Schlitz 26 hin orientierten Lasche 72 (sh. auch Fig. 2) gelagert.

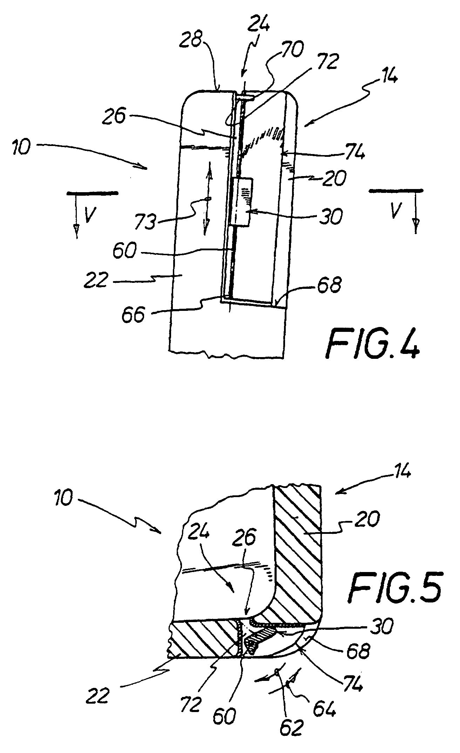

Im Vergleich mit Fig. 3 zeigt die Fig. 4 abschnittweise ein Rückenelement 14 mit Längsschlitzen 26 und einer Gurtklemmeinrichtung 30, die im Vergleich zur Längserstreckung des zugehörigen Schlitzes 26 an die Breite eines fahrzeugeigenen Diagonalgurtes 34 des fahrzeugeigenen Dreipunktsicherheitsgurtsystemes 32 (sh. Fig. 1) angepaßt kurz ausgebildet ist. Die Gurtklemmeinrichtung 30 gemäß Fig.4 ist entlang des zugehörigen Längsschlitzes 26 verstellbar vorgesehen, was durch den Pfeil 73 angedeutet ist. Die Gurtklemmeinrichtung 30 ist um eine Lagerachse 60 (sh. Fig. 5) zwischen einer Gurtklemmposition und einer Gurtfreigabeposition verschwenkbar. Diese Verschwenkbarkeit ist in jeder Höhenstellung der Gurtklemmeinrichtung 30 in bezug auf den zugehörigen Längsschlitz 26 gewährleistet. Die Lagerachse 60 ist bei der in den Figuren 4 und 5 schematisch verdeutlichten Ausbildung des Kindersicherheitssitzes 10 an einem U-förmig gestalteten Gebilde 74 vorgesehen, das den entsprechenden Schlitz 26 großflächig bedeckt, wie aus Fig. 5 ersichtlich ist.

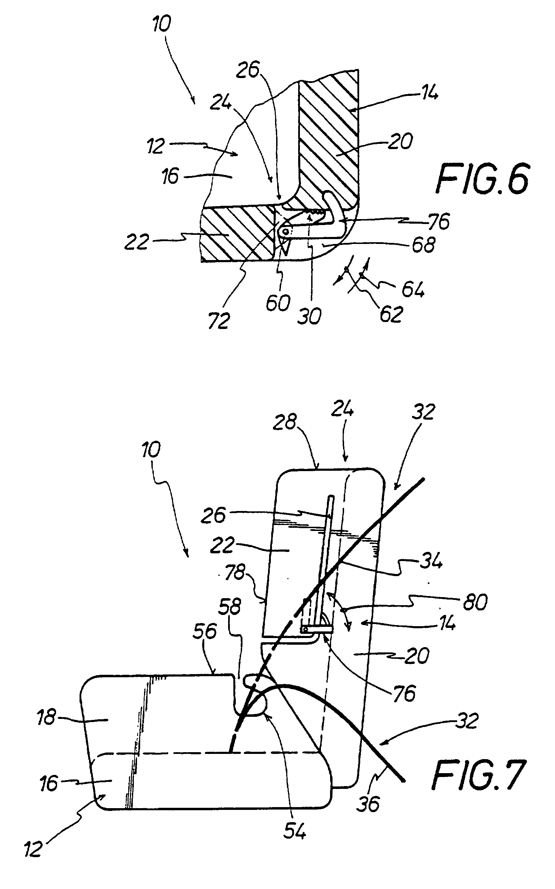

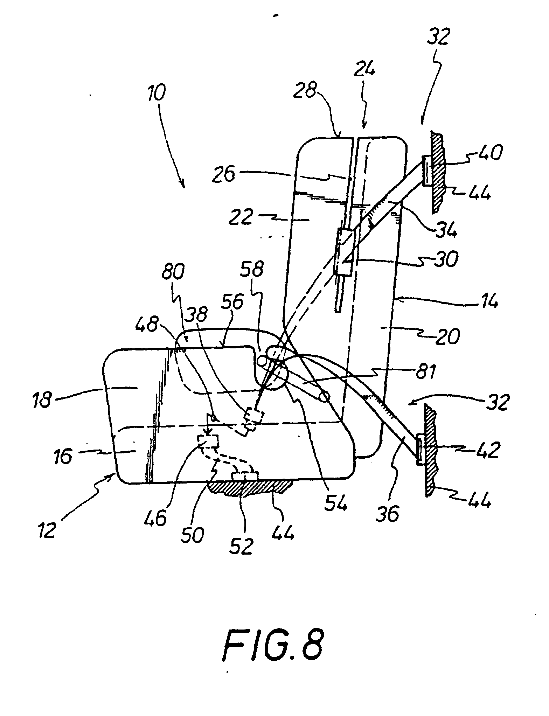

Fig. 6 zeigt in einer der Fig. 2 ähnlichen Schnittdarstellung eine Gurtklemmeinrichtung 30, die mit einer Verbindungs- und Stabilisierungseinrichtung 76 integral verbunden ist. Gleiche Einzelheiten sind in Fig. 6 mit denselben Bezugsziffern wie in Fig. 2 bezeichnet, so daß es sich erübrigt, in Verbindung mit Fig. 6 alle diese Einzelheiten noch einmal detailliert zu beschreiben. Die Verbindungs- und Stabilisierungseinrichtung 76 ist vorzugsweise einstückig mit der Gurtklemmeinrichtung 30 verbunden. Wird die Gurtklemmeinrichtung 30 von der normalen Gurtklemmposition in die Gurtfreigabestellung um die Lagerachse 60 herum in Richtung des Pfeiles 62 verschwenkt, so wird gleichzeitig die Verbindungs- und Stabilisierungseinrichtung 76 vom Rückenteil 20 gelöst, so daß der Schlitz 26 für den Diagonalgurt 34 des fahrzeugeigenen Dreipunktsicherheitsgurtes 32 (sh. Fig. 1) frei zugänglich wird. Wird dann die Gurtklemmeinrichtung 30 wieder freigelassen, so wird sie automatisch in Richtung des Pfeiles 64 in die Gurtklemmeinrichtung zurückgestellt, wobei gleichzeitig die Verbindungs- und Stabilisierungseinrichtung 76 wieder mit dem Rückenteil 20 mechanisch verbunden wird. Mit Hilfe der Verbindungs- und Stabilisierungseinrichtung 76 wird folglich die durch den zugehörigen Schlitz 26 bedingte Reduktion der mechanischen Stabilität des Kindersicherheitssitzes 10 bzw. seines Rückenelementes 14 desselben wieder kompensiert, d.h. die erforderliche mechanische Stabilität des Rückenelementes 14 auch bei Ausbildung desselben mit einseitig offenen Schlitzen 26 wieder hergestellt.

Fig. 7 verdeutlicht in einer der Fig. 1 ähnlichen Seitenansicht eine Ausbildung des Kindersicherheitssitzes 10, bei welchem das Rückenelement 14 mit zwei seitlichen, einseitig offenen Schlitzen 26 ausgebildet ist, die nicht -wie gemäß Fig. 1 zur Oberseite 28 hin - sondern umgekehrt spazierstockförmig gestaltet zum Vorderrand 78 der Seitenwangen 22 hin offen gestaltet sind. Auch hier kann eine Verbindungs- und Stabilisierungseinrichtung 76 vorgesehen sein, die zwischen einer strichliert angedeuteten Freigabeposition und einer mit durchgezogenen Linien angedeuteten Verbindungs- und Stabilisierungsstellung verschwenkbar ist, was durch den bogenförmigen Doppelpfeil 80 angedeutet ist. In der Freigabestellung der Verbindungs- und Stabilisierungseinrichtung 76 ist es möglich, den nur durch eine Linie angedeuteten Diagonalgurt 34 eines fahrzeugeigenen Dreipunktsicherheitsgurtsystemes 32 in den entsprechenden Schlitz 26 einzuführen. Der Beckengurt 36 des fahrzeugeigenen Dreipunktsicherheitsgurtsystemes 32 ist in Fig. 7 ebenfalls nur durch eine Linie schematisch angedeutet.

Die Schlitze 26 können sich über den größten Teil der Höhenabmessung des Rückenelementes 14 erstrecken.

## Patentansprüche

1. Kindersicherheitssitz mit einem Sitzelement (12) und einem Rückenelement (14), wobei das Sitzelement (12) ein Sitzteil (16) und von diesem seitlich nach oben stehende Wangen (18), und das Rückenelement (14) ein Rückenteil (20) und von diesem seitlich nach vorne ragende Seitenwangen (22) aufweist, und zur Festlegung des fahrzeugeigenen, einen Beckengurt (36) und einen Diagonalgurt (34) aufweisenden Dreipunktsicherheitsgurtes (32) eines Kraftfahrzeugsitzes zwei seitliche, einseitig offene Schlitze (26) vorgesehen sind,
**dadurch gekennzeichnet,**
**daß** die beiden seitlichen, einseitig offenen Schlitze (26) am Rückenelement (14) im Übergangsbereich (24) zwischen dem Rückenteil (20) und den Seitenwangen (22) in den Seitenwangen (22) des Rückenelementes (14) vorgesehen sind, wobei jeder der beiden Schlitze (26) mit einer solchen Länge ausgebildet ist, daß der fahrzeugeigene Sicherheitsgurt ohne unnötige Umlenkungen direkt in der passenden Höhe und in der passenden Schräge über die sicherheitstechnisch richtige Stelle an der Schulter des im Kindersicherheitssitz befindlichen Kindes geführt wird, wobei diese optimierte Gurtführung von der Größe bzw. Stärke des Kindes unabhängig ist.

2. Kindersicherheitssitz nach Anspruch 1,
**dadurch gekennzeichnet,**
**daß** die beiden Schlitze (26) zum Vorderrand (78) der Seitenwangen (22) des Rückenelementes (14) hin offen sind.

3. Kindersicherheitssitz nach Anspruch 1,
**dadurch gekennzeichnet,**
**daß** die beiden Schlitze (26) zur Oberseite (28) des Rückenelementes (14) hin offen ausgebildet sind.

4. Kindersicherheitssitz nach einem der Ansprüche 1 bis 3,
**dadurch gekennzeichnet,**
**daß** in jeder seitlichen Wange (18) des Sitzelementes (12) ein Loch (54) ausgebildet ist, das zum Oberrand (56) der entsprechenden Wange (18) hin durch eine Verengung (58) offen ist.

5. Kindersicherheitssitz nach einem der Ansprüche 1 bis 3,
**dadurch gekennzeichnet,**
**daß** mindestens einer der beiden Schlitze (26) mit einer Gurtklemmeinrichtung (30) versehen ist.

6. Kindersicherheitssitz nach Anspruch 5,
**dadurch gekennzeichnet,**
**daß** sich die Gurtklemmeinrichtung (30) über die Länge des zugehörigen Schlitzes (26) erstreckt.

7. Kindersicherheitssitz nach Anspruch 5,
**dadurch gekennzeichnet,**
**daß** die Gurtklemmeinrichtung (30) im Vergleich zur Länge des zugehörigen Schlitzes (26) kurz und entlang des Schlitzes (26) verstellbar vorgesehen ist.

8. Kindersicherheitssitz nach einem der vorhergehenden Ansprüche,
**dadurch gekennzeichnet,**
**daß** an jedem Schlitz (26) eine Verbindungs- und Stabilisierungseinrichtung (76) vorgesehen ist, die zwischen einer den Schlitz (26) freigebenden Stellung und einer Verbindungs- bzw. Überbrückungsstellung verstellbar ist.

9. Kindersicherheitssitz nach Anspruch 8,
**dadurch gekennzeichnet,**
**daß** die Verbindungs- und Stabilisierungseinrichtung (76) mit der Gurtklemmeinrichtung (30) kombiniert ist.

10. Kindersicherheitssitz nach einem der vorhergehenden Ansprüche,
**dadurch gekennzeichnet,**
**daß** das Sitzelement (12) und das Rückenelement (14) voneinander unabhängige, miteinander zum Kindersicherheitssitz (10) verbundene Teile sind.

## Claims

1. Child's safety seat having a seat element (12) and a back element (14), the seat element (12) having a *seat* part (16) and walls (18) projecting upwards laterally from said seat part, and the back element (14) having a back part (20) and side walls (22) protruding forwards laterally from said back part, and two lateral slots (26) which are open on one side being provided for the securing of the three-point safety belt (32) of a motor-vehicle seat, which belt is integral to the vehicle and has a lap belt (36) and a diagonal belt (34), **characterized in that** the two lateral slots (26) which are open on one side are provided in the side walls (22) of the back element (14), in the transitional region (24) between the back part (20) and the side walls (22), the length of each of the two slots (26) being designed such that the safety belt which is integral to the vehicle is guided without unnecessary deflections directly at the appropriate height and appropriate inclination over the correct point, in terms of safety, on the shoulder of the child in the child's safety seat, this optimized guidance of the belt being independent of the size or strength of the child.

2. Child's safety seat according to Claim 1, **characterized in that** the two slots (26) are open towards the front edge (78) of the side walls (22) of the back element (14).

3. Child's safety seat according to Claim 1, **characterized in that** the two slots (26) are designed such that they are open towards the upper side (28) of the back element (14).

4. Child's safety seat according to one of Claims 1 to 3, **characterized in that** a hole (54) is formed in each lateral wall (18) of the seat element (12), said hole being open towards the upper edge (56) of the corresponding wall (18) through a constriction (58).

5. Child's safety seat according to one of Claims 1 to 3, **characterized in that** at least one of the two slots (26) is provided with a belt-clamping device (30).

6. Child's safety seat according to Claim 5, **characterized in that** the belt-clamping device (30) extends over the length of the associated slot (26).

7. Child's safety seat according to Claim 5, **characterized in that** the belt-clamping device (30) is provided to be short in comparison with the length of the associated slot (26) and in a manner such that it can be adjusted along the slot (26).

8. Child's safety seat according to one of the preceding claims, **characterized in that** a connecting and stabilizing device (76) is provided on each slot (26), which device can be adjusted between a position releasing the slot (26) and a connecting or bridging position.

9. Child's safety seat according to Claim 8, **characterized in that** the connecting and stabilizing device (76) is combined with the belt-clamping device (30).

10. Child's safety seat according to one of the preceding claims, **characterized in that** the seat element (12) and the back element (14) are parts which are independent of each other and are connected to each other to form the child's safety seat (10).

## Revendications

1. Siège de sécurité pour enfant, du type comportant une assise (12) et un dossier (14), l'assise (12) se composant d'une portion d'assise proprement dite (16) et de joues (18) partant vers le haut depuis les côtés de ladite portion et le dossier se composant d'une portion d'appui de dos (20) et de joues latérales (22) partant vers l'avant depuis les côtés de ladite portion et, pour la fixation de la ceinture de sécurité à trois points (32) faisant partie du véhicule, se composant d'une ceinture de bassin (36) et d'une ceinture diagonale (34) d'un siège pour véhicule, étant pourvue de deux fentes latérales (26) ouvertes sur un côté, **caractérisé en ce que** les deux fentes latérales ouvertes sur un côté (26) sont prévues sur le dossier (14) dans la zone intermédiaire (24) entre la portion d'appui de dos (20) et les joues latérales (22) dans les joues latérales (22) du dossier (14), chacune des deux fentes (26) ayant une longueur telle que la ceinture de sécurité faisant partie du véhicule est amenée sans changement de direction inutile directement à la hauteur adaptée et à l'inclinaison adaptée à l'emplacement techniquement convenable du point de vue de la sécurité sur l'épaule de l'enfant se trouvant dans le siège de sécurité pour enfant, ce guidage optimisé de la ceinture étant indépendant de la taille, c'est-à-dire de la force de l'enfant.

2. Siège de sécurité pour enfant selon la revendication 1, **caractérisé en ce que** les deux fentes (26) sont ouvertes vers le bord avant (78) des joues latérales (22) du dossier (14).

3. Siège de sécurité pour enfant selon la revendication 1, **caractérisé en ce que** les deux fentes (26) sont ouvertes vers le côté supérieur (28) du dossier (14).

4. Siège de sécurité pour enfant selon l'une des revendications 1 à 3, **caractérisé en ce que** dans chacune des joues latérales (18) de l'assise (12) est pratiqué un trou (54) qui s'ouvre vers le bord supérieur (56) de la joue correspondante (18) par un rétrécissement (58).

5. Siège de sécurité pour enfant selon l'une des revendications 1 à 3, **caractérisé en ce qu'**au moins l'une des deux fentes (26) présente un dispositif de pincement (30) pour la ceinture.

6. Siège de sécurité pour enfant selon la revendication 5, **caractérisé en ce que** le dispositif de pincement pour la ceinture (30) s'étend sur la longueur de la fente (26) correspondante.

7. Siège de sécurité pour enfant selon la revendication 5, **caractérisé en ce que** le dispositif de pincement pour la ceinture (30) est court par rapport à la longueur de la fente correspondante (26) et est prévu réglable le long de la fente (26).

8. Siège de sécurité pour enfant selon l'une des revendications précédentes, **caractérisé en ce que** sur chaque fente (26) est prévu un dispositif de liaison et de stabilisation (76) qui est réglable entre une position laissant libre la fente (26) et une position de liaison ou de réunion.

9. Siège de sécurité pour enfant selon la revendication 8, **caractérisé en ce que** le dispositif de liaison et de stabilisation (75) est combiné avec le dispositif de pincement (30).

10. Siège de sécurité pour enfant selon l'une des revendications précédentes, **caractérisé en ce que** l'assise (12) et le dossier (14) constituent des éléments indépendants l'un de l'autre, réunis l'un avec l'autre pour former le siège de sécurité pour enfant (10).
